# EUROPÄISCHE PATENTSCHRIFT

(11) **EP 1 348 493 B1**
(45) Veröffentlichungstag und Bekanntmachung des Hinweises auf die Patenterteilung: **31.12.2008**
(21) Anmeldenummer: 03007008.0
(22) Anmeldetag: 27.03.2003
(51) Int. Cl.: B07B 13/18, B07B 1/18, B07B 1/46

(54) **Motorische Verstellung eines Lochsiebs**
Motorized adjustement of a screen
Réglage motorisé d'un tamis

(30) Priorität: 28.03.2002 DE 10214326; 27.09.2002 DE 10245445
(43) Veröffentlichungstag der Anmeldung: 01.10.2003
(73) Patentinhaber: Huning Umwelttechnik GmbH + Co. KG, 49326 Melle (DE)
(72) Erfinder: Huning, Walter, 49326 Melle (DE)
(74) Vertreter: Engelmann, Kristiana

(56) Entgegenhaltungen:
- DE-A- 4 027 111
- DE-A- 19 807 145
- DE-C- 205 518
- US-A- 121 192
- US-A- 2 315 651
- US-A- 2 642 993

## Beschreibung

Die vorliegende Anmeldung bezieht sich auf eine Siebvorrichtung mit zumindest zwei aufeinanderliegenden Siebelementen, die jeweils eine Mehrzahl von Sieblöchern aufweisen, die abhängig von der relativen Lage der Siebelemente zueinander gemeinsame Sieböffnungen ausbilden, und einer Verstellvorrichtung.

Eine gattungsgemäße Siebvorrichtung ist aus der Offenlegungsschrift DE 40 27 111 bekannt. Die dort beschriebene Siebvorrichtung ermöglicht es, durch Verstellung der relativen Lage der Siebelemente zueinander die Sieböffnung zu verändern. Der Vorteil einer solchen Siebanordnung ist darin zu sehen, daß diese leicht auf eine große Spreizung unterschiedlicher Partikelgrößen einstellbar ist. Der Vorteil der leichten Anpaßbarkeit an unterschiedliche Siebgüter läßt sich jedoch nur dann realisieren, wenn eine leichte Verstellbarkeit der Lochgröße der Siebvorrichtung tatsächlich gegeben ist. Versuche mit einer gattungsgemäßen Siebvorrichtung haben ergeben, daß sich Fremdmaterial zwischen die aufeinanderliegenden Oberflächen der Siebelemente schiebt, Ausbeulungen verursacht und dadurch eine Verstellbarkeit des Siebes unter Umständen komplett blockiert, zumindest aber erheblich erschwert. Der vermeintliche Vorteil einer leichten Verstellung der Größe der Sieböffnungen geht auf diese Weise verloren.

Demgemäß ist es die Aufgabe der vorliegenden Erfindung, die gattungsgemäße Siebvorrichtung so zu verbessern, daß auch über eine längere Betriebsdauer der Siebvorrichtung hinweg jederzeit die Größe der Sieböffnungen verstellbar ist.

Die erfindungsgemäße Aufgabe wird gelöst, indem die Siebelemente durch zumindest ein Spannelement aufeinander gedrückt gehalten sind und die relative Lage der Siebelemente zueinander durch die Betätigung motorischer Stellmittel veränderbar ist.

Erst die Kombination des Aufeinander-Spannens mit einer motorischen Verstellung stellt eine einwandfreie und leichte Funktion der Verstellvorrichtung über die Lebensdauer der Siebvorrichtung hinweg sicher. So ist es einerseits erforderlich, die Siebelemente aufeinander zu pressen, um dadurch einen Materialaufbau zwischen den aufeinanderliegenden Siebflächen zu vermeiden. Durch das Zusammenpressen der Siebelemente wird jedoch die relative Verschiebung der Siebelemente zueinander, die für eine Veränderung der Größe der Sieböffnung unabdingbar ist, erheblich erschwert. Mit Hilfe von manuellen Verstellvorrichtungen ist es nur schwer möglich, den durch den Anpreßdruck erhöhten Reibungswiderstand zu überwinden. Da durch die motorischen Stellmittel eine größere Stellkraft erzeugt werden kann, sichert die Kombination dieser motorischen Stellmittel mit den Spannelementen eine sichere Funktion der Verstellvorrichtung über die Lebensdauer der Siebvorrichtung ab. Ein weiterer Vorteil dieser Kombination ist darin zu sehen, daß eine motorische Stellvorrichtung fernbedienbar ist. Somit ermöglicht es die erfindungsgemäße Kombination, die Größe der Sieböffnung der Siebvorrichtung auch während eines laufenden Siebvorganges nach Bedarf anzupassen. Das Sieb kann auch leicht durch eine Hubbewegung gereinigt werden. Die Kanten von übereinander liegenden Sieblöchern werden bei der Hubbewegung scherenartig übereinander bewegt, wodurch Fremdkörper, die im Bereich der Sieblöcher festsitzen könnten, erfaßt, geschnitten und abgeschert werden.

Weitere vorteilhafte Ausgestaltungen der Erfindung ergeben sich aus den Merkmalen der Unteransprüche sowie der nachfolgenden gegenständlichen Beschreibung und den Zeichnungen.

Die soll nun anhand von Ausführungsbeispielen erläutert werden. Es zeigen:
- Fig. 1:: eine schematische Darstellung einer Siebvorrichtung,
- Fig. 2:: eine Siebvorrichtung in Seitenansicht,
- Fig. 3:: eine Siebvorrichtung von oben,
- Fig. 4:: eine Anbindungszone der Verstellvorrichtung mit einem Siebelement,
- Fig. 5:: eine Aufhängung der Siebbaugruppe,
- Fig. 6:: ein Siebelement von oben,
- Fig. 7:: ein Spannelement,
- Fig. 8:: eine Siebvorrichtung mit einem Siebelement aus Fig. 6,
- Fig. 9:: eine vergrößerte Darstellung einer Stellvorrichtung,
- Fig. 10:: eine Seitenansicht einer Verstellvorrichtung,
- Fig. 11:: eine Siebvorrichtung mit Lochbild,
- Fig. 12:: eine Trommelsiebvorrichtung in seitlicher Ansicht,
- Fig. 13:: ein vergrößerter Ausschnitt der Verstellvorrichtung aus Fig. 12,
- Fig. 14 - 23:: diverse Lochmuster in unterschiedlichen Lagen der Siebelemente zueinander.

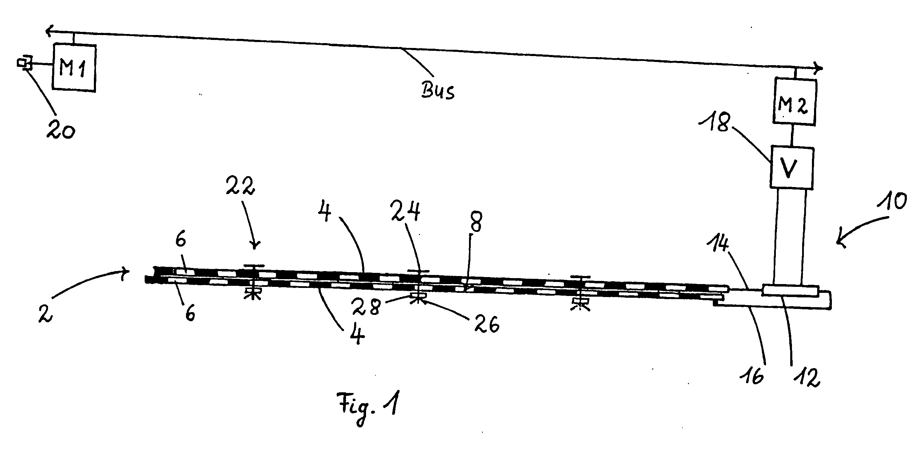

In Fig. 1 ist eine Siebvorrichtung 2 gezeigt, die aus zwei aufeinanderliegenden Siebelementen 4 gebildet ist. Jedes Siebelement 4 weist eine Anzahl von Sieblöchern 6 auf. Jeweils übereinanderliegende Sieblöcher 6 der aufeinanderliegenden Siebelemente 4 bilden gemeinsam eine Sieböffnung 8. An einem Ende der Siebvorrichtung 2 ist eine Verstellvorrichtung 10 dargestellt, die einen Hubzylinder 12 aufweist. In dem Hubzylinder 12 ist eine Kolbenstange 14 angeordnet, die bei einer Verstellbewegung die relative Lage des oberen Siebelementes 4 im Verhältnis zum unteren Siebelement 4 verändert, wobei das untere Siebelement 4 im Ausführungsbeispiel als feststehend ausgebildet ist. Bei einer Veränderung der relativen Lage der Siebelemente 4 zueinander verändert sich die Größe der gemeinsamen Sieböffnung 8. Während ein einzelnes Siebloch 6 ganz oder teilweise von einem anderen Siebelement 4 abgedeckt sein kann, ist als Sieböffnung 8 eine Öffnung bezeichnet, die es dem Siebgut gestattet, sich bei passender Partikelgröße vollständig durch die aufeinanderliegenden Siebelemente 4 hindurch zu bewegen. Eine einzelne Sieböffnung 8 ist von anderen Sieböffnungen 8 abgegrenzt und getrennt.

Der Hubzylinder 12 ist in einer Halterung 16 gelagert, die im Ausführungsbeispiel an dem feststehenden unteren Siebelement 4 befestigt ist. Der Hubzylinder 12 wird durch ein Hydraulikventil 18 betätigt, der seine Stellbefehle wiederum von einem Mikroprozessor M2 erhält. Der Mikroprozessor M2 ist an ein Bus-System angeschlossen, über das Stellbefehle, die mit einem Schalter 20 von einem Bediener gegeben werden, von einem an den Schalter 20 angeschlossenen Mikroprozessor M1 an den Mikroprozessor M2 übermittelbar sind, an den das Hydraulikventil 18 angeschlossen ist. An Stelle eines Bus-Systems kann auch eine mechanische, hydraulische oder einfache elektrische Schaltverbindung bestehen. An Stelle eines Hydraulikzylinders 12 kann auch ein Elektromotor oder ein anderer geeigneter Stellmotor verwendet werden.

Die Siebelemente 4 sind von Spannelementen 22 aufeinander gedrückt gehalten.

Die Spannelemente 22 bestehen aus einem Schraubbolzen 24, der durch die Siebelemente 4 hindurchgeführt ist und endseitig mit einer Schraubmutter 26 festgezogen ist. Zur Vergrößerung der Auflagefläche und zur Verteilung des Anpreßdrucks ist unter die Schraubmutter 26 noch eine Unterlegscheibe 28 gelegt.

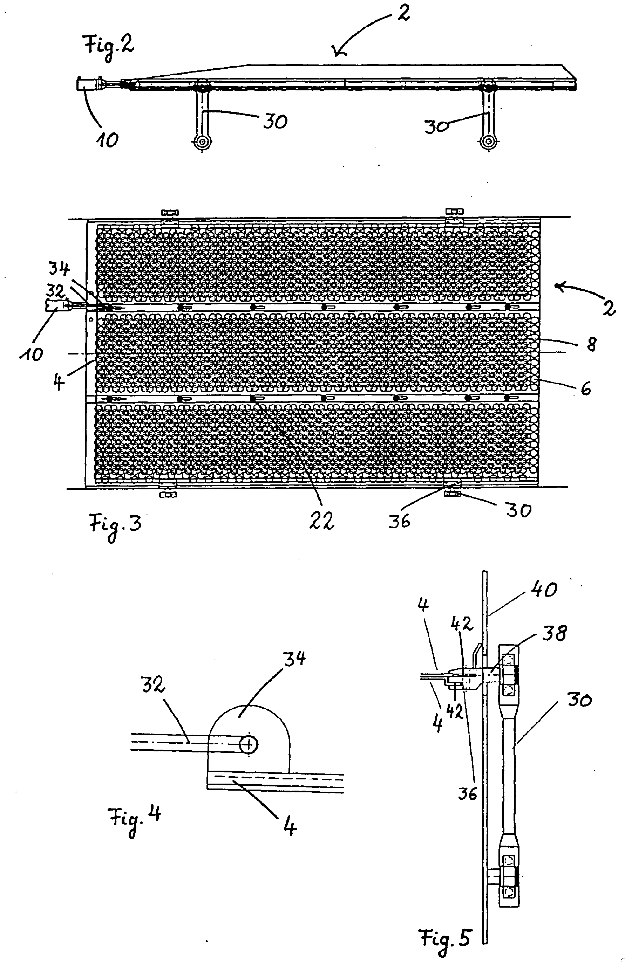

In Fig. 2 ist eine Siebvorrichtung 2 in einer Seitenansicht zu sehen. Die Verstellvorrichtung 10 ist an einer Stirnseite der Siebvorrichtung 2 befestigt. Die Siebvorrichtung 2 ist an Schwinghebeln 30 aufgehängt. Eine Schwingbewegung, die von den Schwinghebeln 30 übertragen wird, fördert das Siebgut über die Siebvorrichtung 2 und ermöglicht eine Sichtung des Siebguts. Die Verstellvorrichtung 10 ist an der Siebvorrichtung 2 befestigt und wird von den Schwinghebeln 30 mittelbar mitbewegt. An der Siebvorrichtung 2 können auch mehrere motorische Stellmittel befestigt sein, um insbesondere auch eine Verstellbewegung in andere Richtungen zu ermöglichen. Neben einer Schub- oder Zugbewegung ist auch eine Drehbewegung eines Siebelements 4 relativ zu einem anderen Siebelement 4 möglich.

Leistungsmäßig kann die Verstellvorrichtung 10 so ausgebildet sein, daß sie eine Hubbewegung sehr schnell, beispielsweise in Impulsform, ausführen kann. Eine solche Auslegung ermöglicht es, während des Betriebs der Siebvorrichtung in regelmäßigen Abständen oder immer dann, wenn eine Verstopfung registriert wird, einen Reinigungshub auszuführen, um die Sieblöcher 6 wieder voll durchgängig zu machen. Fremdkörper werden von den Kanten der Sieblöcher, die bei einer schnellen Hubbewegung scherenartig übereinander bewegt werden, geschnitten und abgeschert. Ein solcher Hub kann beispielsweise 1 - 3 Sekunden dauern. Bei einem so kurzen Impuls ist keine wesentliche Beeinträchtigung des Siebergebnisses zu befürchten. Es ergibt sich vielmehr eine Leistungssteigerung, weil die Sieblöcher alle ohne Verstopfungen betrieben werden und keine Maschinenzeit für manuelle Reinigungsvorgänge verloren geht.

In Fig. 3 ist eine Siebvorrichtung aus einer Perspektive von oben gezeigt. Siebelemente 4 werden durch Spannelemente 22 aufeinander gedrückt gehalten. Die Siebelemente 4 weisen jeweils kreisrunde Sieblöcher 6 auf. Die Siebelemente 4 sind in einer solchen relativen Lage zueinander gezeigt, in der sich pro Siebloch 6 jeweils drei kleinere gemeinsame Sieböffnungen 8 ergeben. Die Siebvorrichtung 2 ist in den seitlich angebrachten Schwinghebeln 30 gehalten. Die Stellkraft der Verstellvorrichtung 10 wird über einen Verstellhebel 32 auf eine Verstellachse 34 übertragen, die fest mit einem Siebelement 4 verbunden ist.

Eine Ausschnittsvergrößerung ist in Fig. 4 zu sehen. In dem in Fig. 3 gezeigten Ausführungsbeispiel ist die Verstellvorrichtung 10 direkt an einem Siebelement 4 befestigt. Ein zusätzlicher Rahmen ist in dem Ausführungsbeispiel nicht gezeigt. Auch sind die Siebelemente 4 direkt in eine Haltegabel 36 eingesteckt, die auf der den Siebelementen 4 abgewandten Seite einen Achsstummel 38 aufweist, der in dem Schwinghebel 30 gelagert ist. Der Schwinghebel 30 ist an der Außenseite einer Seitenwand 40 befestigt. Die Seitenwand 40 weist eine Öffnung auf, durch die der Achsstummel 38 herausragt. Die Haltegabel 36 weist Steckschlitze 42 auf, in denen die Siebelemente 4 gehalten sind. Das verstellbare Siebelement 4 ist verschieblich in einem Steckschlitz 42 gelagert, während ein feststehendes Siebelement 4 im Steckschlitz 42 festgelegt ist. Die Steckschlitze 42 können so ausgebildet sein, daß sie als Kulisse zur Führung eines Siebelementes 4 während einer Verstellbewegung dienen.

Eine vergrößerte Darstellung der rahmenlosen Siebaufhängung ist in Fig. 5 gezeigt.

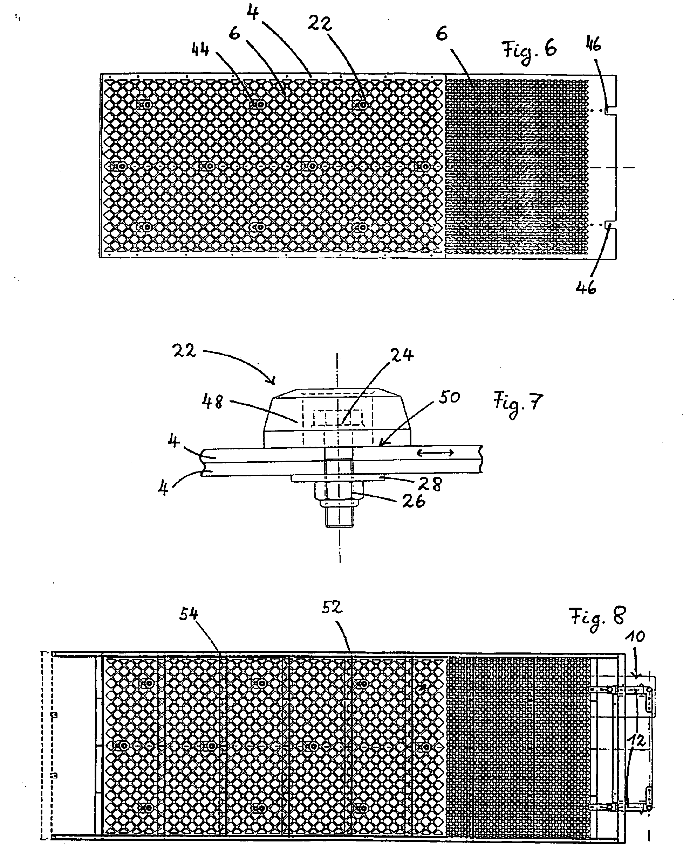

In Fig. 6 ist ein einzelnes Siebelement 4 aus einer Sicht von oben dargestellt. Das Siebelement 4 weist in einem Bereich kleinere Sieblöcher 6 und in einem anderen Bereich größere Sieblöcher 6 auf. Über die Siebfläche des Siebelementes 4 ist eine Mehrzahl von Spannelementen 22 so verteilt, daß diese über die Länge und Breite des Siebelementes 4 eine Anpreßkraft zum Andrücken eines weiteren Siebelementes 4 erzeugen können. Im Siebelement 4 sind Langlöcher 44 angeordnet, durch die das Siebelement 4 während eines Verstellvorganges geführt ist. Das Siebelement 4 weist Ausnehmungen 46 auf, an denen eine Verstellvorrichtung 10 befestigt werden kann. Das in Fig. 6 gezeigte Siebelement 4 ist so ausgebildet, daß dieses nur im Bereich der größeren Sieblöcher 6 auf einem zweiten Siebelement 4 aufliegt.

In Fig. 7 ist ein Spannelement 22 in einer vergrößerten Ansicht zu sehen. Zwei aufeinanderliegende Siebelemente 4 sind vom Spannelement 22 aufeinander gepreßt. Das Spannelement 22 besteht aus einem Schraubbolzen 24, der mit einer Schraubmutter 26 verschraubt ist. Der Anpreßdruck kann durch ein unterschiedliches Anzugsmoment der Schraubmutter 26 variiert werden. Die Schraubmutter 26 kann auf ein Ausgangs-Anzugsmoment eingestellt werden. Nach vielfacher Verstellung der Siebvorrichtung 2 kann es erforderlich sein, das Anzugsmoment der Schraubmutter 26 nachzujustieren. Auch ist es denkbar, daß sich die Siebe aufeinander festgesetzt haben. In dem Fall ist es von Vorteil, die Schraubmutter 26 zu lösen, um die Siebelemente 4 leicht verstellen zu können. Wenn die Siebelemente 4 aus Edelstahl hergestellt sind, kann zumindest ein Festrosten der Siebelemente 4 aneinander vermieden werden.

Der Schraubbolzen 24 ist in einem Preßkörper 48 gelagert, der vom Schraubkopf des Schraubbolzens 24 mit seiner Unterseite auf ein Siebelement 4 gedrückt wird. Die Auflagefläche 50 des Preßkörpers 48 ist somit fest auf die Oberfläche des zugehörigen Siebelementes 4 gepreßt. Versucht man, das obere Siebelement 4 in einer Pfeilrichtung zu verstellen, so müssen zunächst die Reibschlußkräfte überwunden werden, die von der Auflagefläche 50 des Preßkörpers 48, aber auch aus der Reibung der aufeinanderliegenden Flächen der Siebelemente 4 resultieren. Wird der Anpreßdruck zum Aufeinanderpressen der Siebelemente 4 durch eine entsprechende Anspannung der Spannelemente 22 ausreichend hoch gewählt, so ist eine ungewollte Veränderung der relativen Lage der Siebelemente 4 zueinander während des ordnungsgemäßen Betriebes der Siebvorrichtung 2 ausgeschlossen. Eine Verstellung der Siebvorrichtung 2 kann nur dann erfolgen, wenn die aufgebrachte Verstellkraft größer ist als die der Verstellung entgegenwirkende Reibschlußkraft. Im Ausführungsbeispiel besteht der Preßkörper 48 aus einem Hartgummi-Werkstoff oder einem Kunststoff. Um eine Preßkraft in das Spannelement 22 einzubringen, können als flexible Elemente aber auch Tellerfedern, Spiralfedern, oder sonstige flexible oder feste Werkstoffe eingesetzt werden. Die der Oberfläche des zugehörigen Siebelementes 4 zugewandte Auflagefläche des Preßkörpers 48 sollte einen Reibungskoeffizienten aufweisen, der ausreicht, um das verstellbare Siebelement 4 während des Normalbetriebs in einer eingestellten Position zu halten. Zudem sollte der Anpreßdruck vom Preßkörper 48 so auf die Fläche eines Siebelementes 4 verteilt werden, daß dieses möglichst keine Hohlräume mit dem darunterliegenden Siebelement 4 ausbilden kann, indem sich Fremdkörper ansammeln, die zu einer Funktionsbeeinträchtigung und schließlich sogar Zerstörung der Siebvorrichtung 2 führen können. Ein Anpreßdruck auf die aufeinander liegenden Siebelemente 4 wird jedoch nicht nur durch den Preßkörper 48 ausgeübt, sondern auch durch die auf der gegenüber liegenden Seite der Siebelemente 4 angeordneten Teile des Spannelements 22, wie beispielsweise Schrauben, Schraubmuttern, Unterlegscheiben, Tellerfedern und dergleichen.

In Fig. 8 ist das in Fig. 6 dargestellte Siebelement 4 in einen Rahmen 52 eingebaut. Der Rahmen 52 umfaßt das Siebelement 4 an seinem Außenumfang. Die Längsträger des Rahmens 52 sind in Querrichtung durch Versteifungsprofile 54 verstärkt. Die Siebvorrichtung 2 ist durch eine Verstellvorrichtung 10 verstellbar, die aus zwei Hubzylindern 12 besteht. Die beiden Hubzylinder 12 sind am Rahmen 52 befestigt. Die Hubzylinder 12 sind als Gleichlaufzylinder ausgebildet, um eine gleichmäßige Verstellbewegung sicherzustellen.

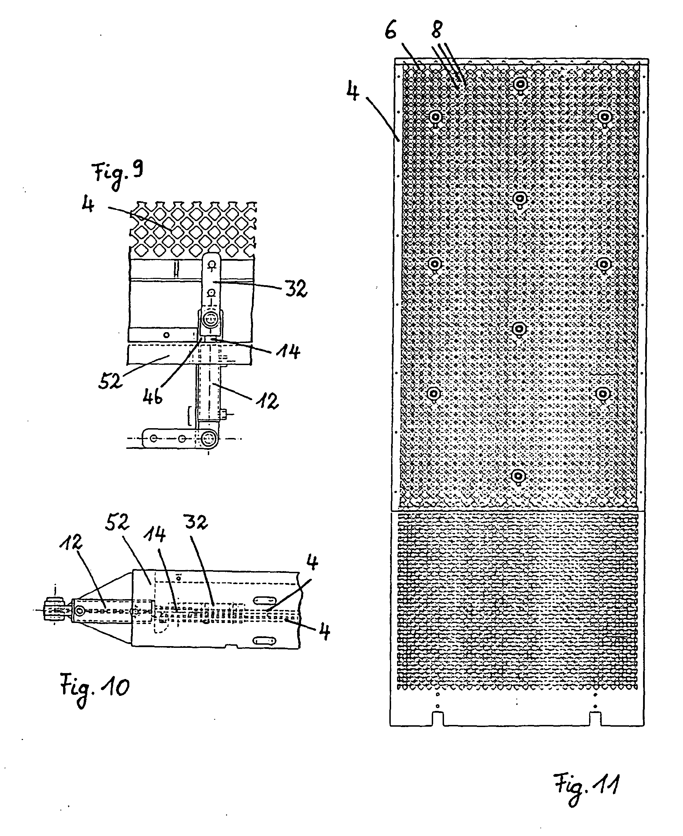

In Fig. 9 ist ein vergrößerter Ausschnitt der in Fig. 8 gezeigten Verstellvorrichtung 10 aus einer Sicht von oben gezeigt, in Fig. 10 ist eine Seitenansicht dargestellt. Die Kolbenstange 14 des Hubzylinders 12 ragt in die im Siebelement 4 vorhandene Ausnehmung 46 hinein. Das Siebelement 4 sowie die Kolbenstange 14 sind durch einen Verstellhebel 32 verbunden, der die Verstellbewegung der Kolbenstange 14 auf das Siebelement 4 überträgt.

In Fig. 11 ist ein Lochsieb gezeigt, das sich bei einer Verstellung des in Fig. 8 gezeigten Siebelementes 4 in einer veränderten relativen Lage zu einem anderen Siebelement 4 ergeben kann. Jedem Siebloch 6 eines Siebelementes 4 sind in dieser Lage jeweils vier kleinere Sieböffnungen 8 zugeordnet.

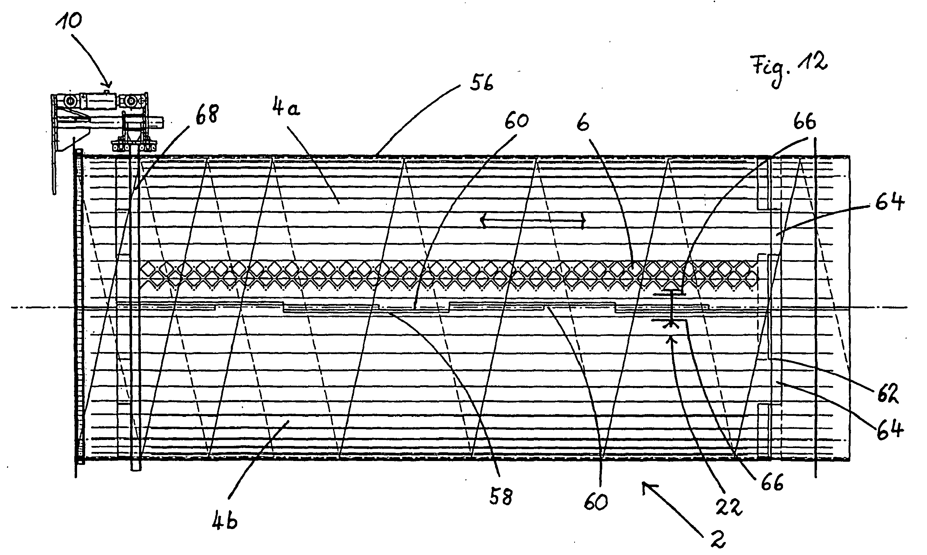

In Fig. 12 ist eine Siebvorrichtung 2 in Form eines zylindrischen Trommelsiebes 56 gezeigt. Der zylindrische Körper weist zumindest in einem Teilbereich übereinanderliegende Siebelemente 4 auf. Jede Lage eines Siebelementes 4 bildet eine eigene Siebebene. In einer Siebebene kann ein Siebelement 4 in mehrere Teilsieb-Elemente unterteilt sein, sowie im Ausführungsbeispiel mit den Teilsieb-Elementen 4a und 4b gezeigt. Die beiden Teilsieb-Elemente 4a und 4b sind etwa halbkreisförmig geformt, wobei die Halbkreisform durch Rundwalzen, aber auch durch eine Mehrzahl von winkligen Abkantungen herbeigeführt sein kann. Die winkligen Abkantungen können als Führung gegen ein relatives Verdrehen in Umfangsrichtung wirken, wenn aufeinanderliegende Siebelemente 4 entsprechend benachbart liegende Abkantungen aufweisen. Neben dem Trommelsieb können natürlich auch Flachsiebe in einer Siebebene in mehrere Teilsieb-Elemente unterteilt sein. Die Teilsieb-Elemente 4a, 4b weisen jeweils eine Trennkante 58 auf, an denen die Teilsieb-Elemente 4a, 4b aneinandergrenzen. Im Bereich der Trennkante 58 weisen die Teilsieb-Elemente 4a, 4b Verzahnungselemente 60 auf, die bei einer Verschiebebewegung des außenseitigen Siebelementes 4 in axialer Richtung in einer formschlüssigen Verbindung zueinander stehen und durch die aufeinanderstehenden Kontaktflächen eine axiale Verschiebebewegung jeweils auf das andere Teilsieb-Element übertragen. Der Verschiebeweg des Siebelementes 4 ist außerdem durch eine Steuerkante 62 vorgegeben, an der sich an den Teilsieb-Elementen 4a, 4b ausgebildete Steuerlaschen 64 entlang bewegen. Die Sieblöcher 6, die sich in dem Siebelement 4 befinden, sind nur in einem Abschnitt beispielhaft dargestellt.

Die beiden Teilsieb-Elemente 4a, 4b sind auf die darunterliegende Trommel des anderen Siebelementes 4 aufgespannt, in dem ein Spannelement 22 Spannstege 66 aufeinander zieht. Eine Verspannung kann jedoch auch mittels Schraubbolzen oder ähnlicher Spannelemente erfolgen, die durch die aufeinanderliegenden Siebelemente 4 hindurchgreifen. An Stelle von Schraubverbindungen können natürlich auch andere Verbindungstechniken wie Spannbügel, Hebelverschlüsse und dergleichen eingesetzt werden.

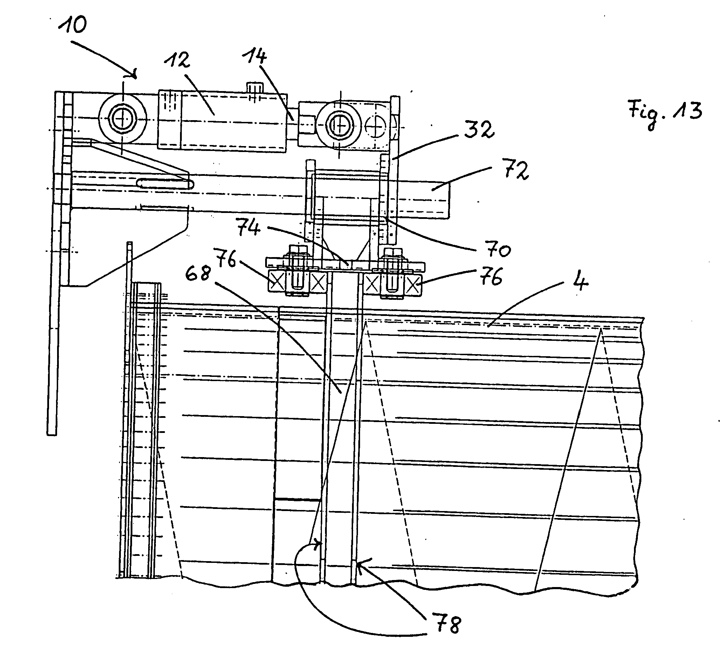

Nicht nur ein erfindungsgemäßes Flachsieb, sondern auch ein Trommelsieb 56 kann bewegbar angeordnet sein, um das Siebgut besser voneinander trennen zu können. Neben schwingenden Bewegungen sind bei einem Trommelsieb auch rotierende Bewegungen möglich. Die Verstellvorrichtung 10 kann so ausgebildet werden, daß eine Verstellung der Größe der Sieböffnungen 8 auch bei schwingendem und/oder rotierendem Sieb möglich ist. Die Verstellvorrichtung 10 wirkt zur Verstellung eines Siebelementes 4 auf einen Stellring 68, der fest mit dem verstellbaren Siebelement 4 verbunden ist. Die Funktion der Verstellvorrichtung 10 im Zusammenwirken mit dem Stellring 68 ist in einer vergrößerten Darstellung in Fig. 13 gezeigt. Die Verstellvorrichtung 10 besteht aus einem Hubzylinder 12 mit einer Kolbenstange 14, an die ein Verstellhebel 32 angeschlossen ist. An dem Verstellhebel 32 ist eine Steuerhülse 70 befestigt, die auf einer Steuerwelle 72 gleitend verschiebbar geführt ist. An der Steuerhülse 70 ist eine Stellgabel 74 befestigt, die mit ihren Gabelenden den Stellring 68 seitlich umgreift. An den Gabelenden der Stellgabel 74 sind Führungsrollen 76 befestigt, deren Drehachsen orthogonal zur Verstellrichtung des Hubzylinders 12 liegen. Die Laufflächen der Führungsrollen 76 wirken jeweils auf eine Oberfläche 78 des Stellrings 68. Die Drehachse der Führungsrollen 76 liegt orthogonal zur Verstellrichtung des Hydraulikzylinders 12, es sind jedoch auch andere Winkelstellungen denkbar, insbesondere wenn die Winkellage der Lauffläche der Führungsrollen 76 entsprechend angepaßt ist. In Umkehrung des Funktionsprinzips kann der Stellring 68 auch als kolbenstangenseitige verstellbare Druckplatte oder als U-förmiges Ringprofil ausgebildet sein, die auf an einem Siebelement 4 befestigte Führungsrollen 76 wirken. Genauso können die im Ausführungsbeispiel auf der Außenseite der Siebtrommel angebrachten Stellmittel auch innen im Trommelsieb 56 angeordnet sein, oder die Funktionselemente werden so mit verlängernden Hebelarmen ausgestattet, daß Teile im Stirnbereich der Siebtrommel 56 angeordnet werden können.

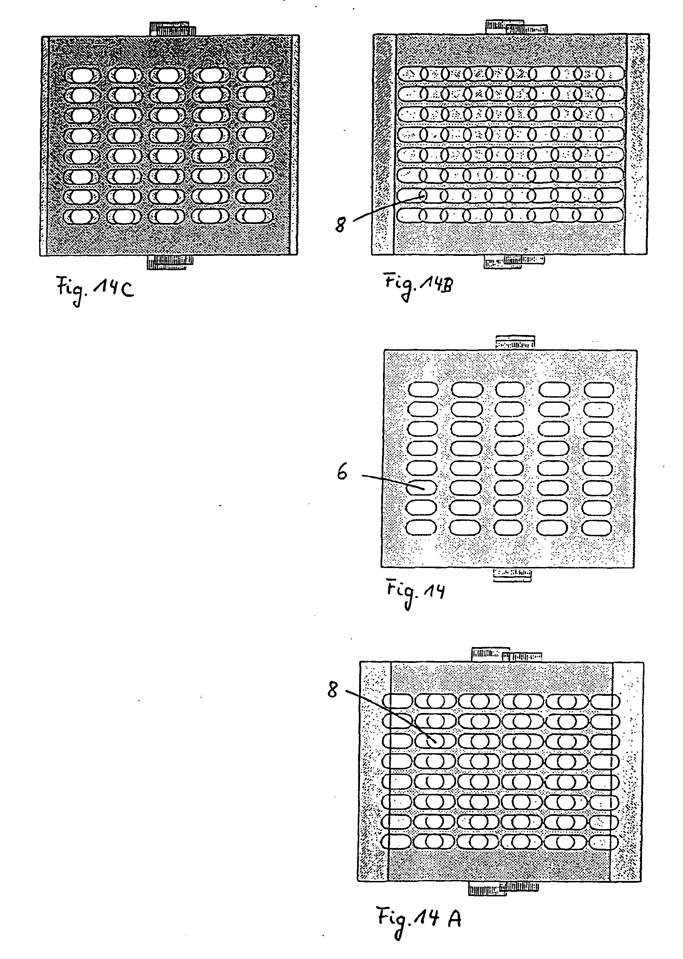

In den Figuren 14 sind verschiedene Lochbilder von Siebelementen 4 dargestellt, die Langlöcher aufweisen. Jedes Siebelement 4 weist Sieblöcher 6 auf, die deckungsgleich ausgebildet sind. Übereinanderliegende Sieblöcher 6 der aufeinanderliegenden Siebelemente 4 bilden jeweils eine oder mehrere Sieböffnungen 8 aus. Die gemeinsam ausgebildeten Sieböffnungen 8 stellen jeweils einzelne und durch Stege zumindest eines Siebelementes 4 voneinander getrennte Öffnungen im Sieb dar, durch die Siebgut hindurchfallen kann. Während ein Siebloch 6 durch Teile eines anderen Siebelements 4 ganz oder teilweise verdeckt sein kann, ist mit dem Begriff Sieböffnung eine solche Öffnung gemeint, durch die Siebgut durch alle Ebenen von Siebelementen 4 frei hindurch fallen kann. Verändert man die relative Lage der aufeinanderliegenden Siebelemente 4 zueinander, verändert sich die Form und Größe der gemeinsamen Sieböffnungen 8. In Fig. 13A ergeben sich im Verhältnis zu den Sieblöchern 6 stark verkleinerte Sieböffnungen 8, die eine kreisrunde Geometrie zeigen. In der in Fig. 14C gezeigten relativen Lage der Siebelemente 4 sind die Löcher größer als in Fig. 14A, in Fig. 14B sind die Sieböffnungen 8 am kleinsten.

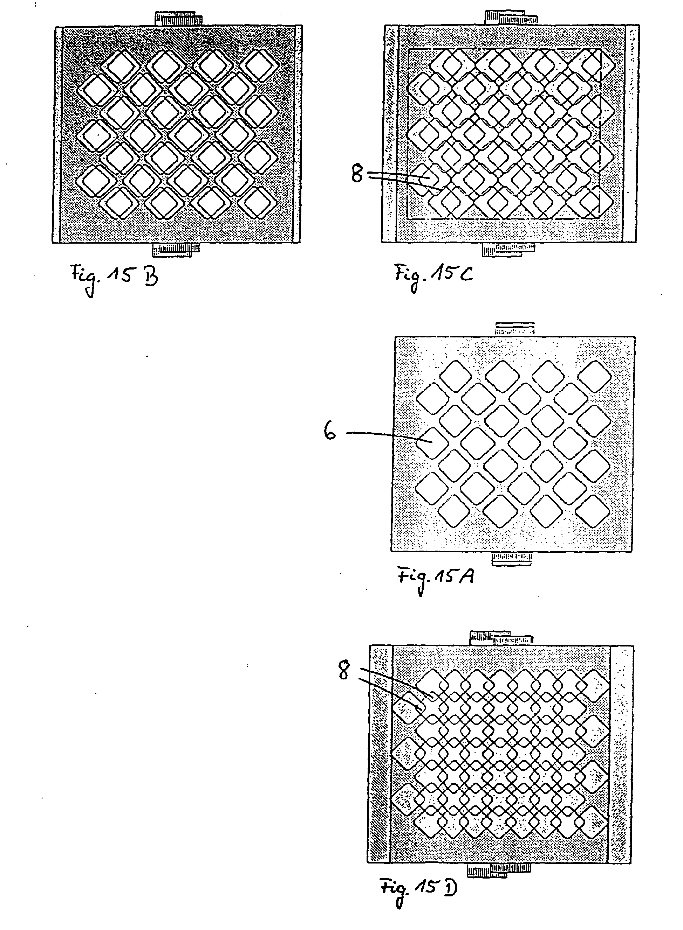

In den Figuren 15 sind Siebelemente 4 gezeigt, die Sieblöcher 6 in Rautenform aufweisen. Die Figur 15A zeigt bei deckungsgleicher Lage der Sieblöcher 6 die größtmögliche Sieböffnung 8, während in Figur 15B die gemeinsame Sieböffnung 8 schon verkleinert ist. In Figur 15C ist die Sieböffnung nochmals verkleinert, wobei ein Siebloch 6 eines Siebelementes 4 zusätzlich zu der rautenförmigen verkleinerten Sieböffnung 8 weitere zwei gemeinsame Sieböffnungen ausbildet, die aus zwei schmalen Schlitzen bestehen. Ein Siebloch 6 bildet also mit drei anderen Sieblöchern 6 des anderen Siebelementes 4 drei gemeinsame Sieböffnungen 8 aus. In Fig. 15D ist eine Stellung der Siebelemente 4 relativ zueinander gezeigt, in der ein Siebloch 6 eines Siebelementes 4 mit vier anderen Sieblöchern 6 des anderen Siebelementes 4 vier gemeinsame Sieböffnungen 8 ausbildet. Die unterschiedlichen Lochzahlen ergeben sich aus der seitlich versetzt zueinander angeordneten Lage der Löcher im Hinblick auf den Verschiebeweg eines oder mehrerer Siebelemente 4 relativ zueinander.

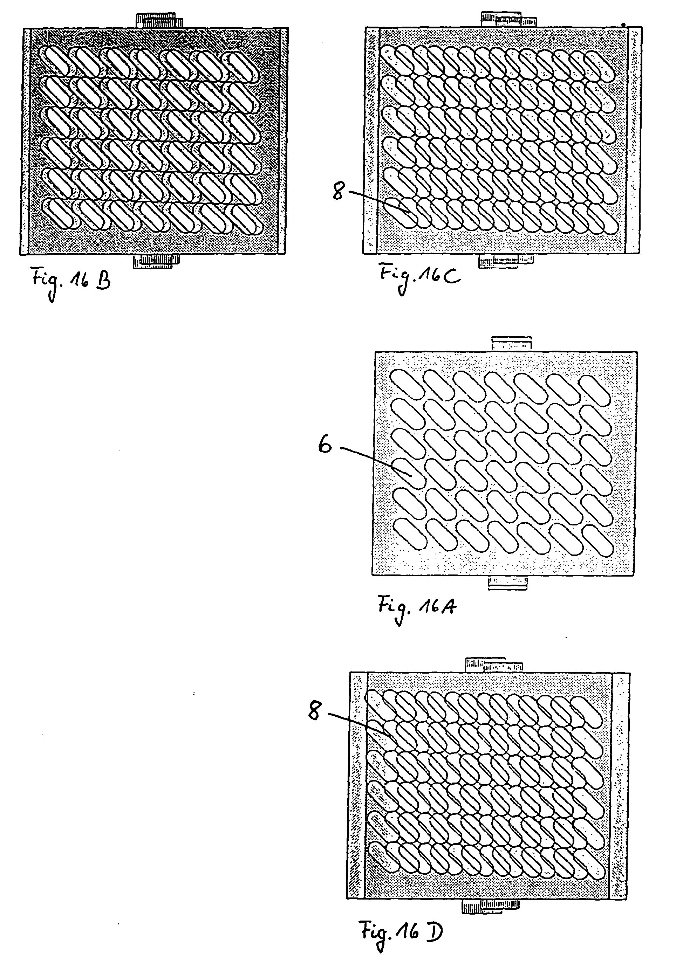

In Fig. 16 sind Siebelemente 4 mit diagonal angestellt angeordneten Langlöchern 6 gezeigt. Während die Fig. 16A wieder die größtmögliche offene Fläche der Sieböffnungen 8 zeigt, verkleinert sich die Fläche der gemeinsamen Sieböffnungen 8 zunehmend über die Figuren 16B, 16C zu 16D. In Fig. 16D sind die eingestellten Sieböffnungen 8 unterschiedlich groß, wobei ein Siebloch wieder mit zwei anderen Sieblöchern des anderen Siebelementes 4 zwei gemeinsame Sieböffnungen 8 ausbildet.

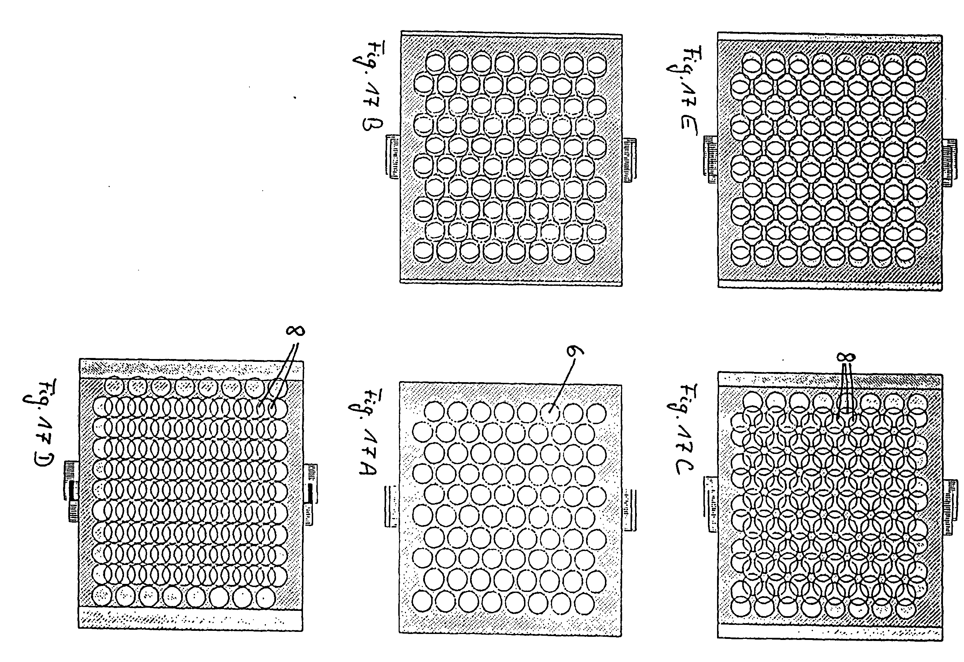

In den Figuren 17 weisen die Siebelemente 4 kreisrunde Sieblöcher 6 auf. Da die Sieblöcher 6 versetzt zueinander in den Siebelementen 4 angeordnet sind, ergeben sich bei ausreichender Verstellung wieder mehrere gemeinsame Sieböffnungen 8 in einem Siebloch 6, wie in den Figuren 17C bis 17E gezeigt. Während in Figur 17C jedes Siebloch 6 drei gemeinsame Sieböffnungen 8 aufweist, ergeben sich bei einer Verstellung zur Figur 17D nur zwei gemeinsame Sieböffnungen, während in der Verstellsituation, die in Fig. 17E gezeigt ist, wieder drei gemeinsame Sieböffnungen 8 zeigen.

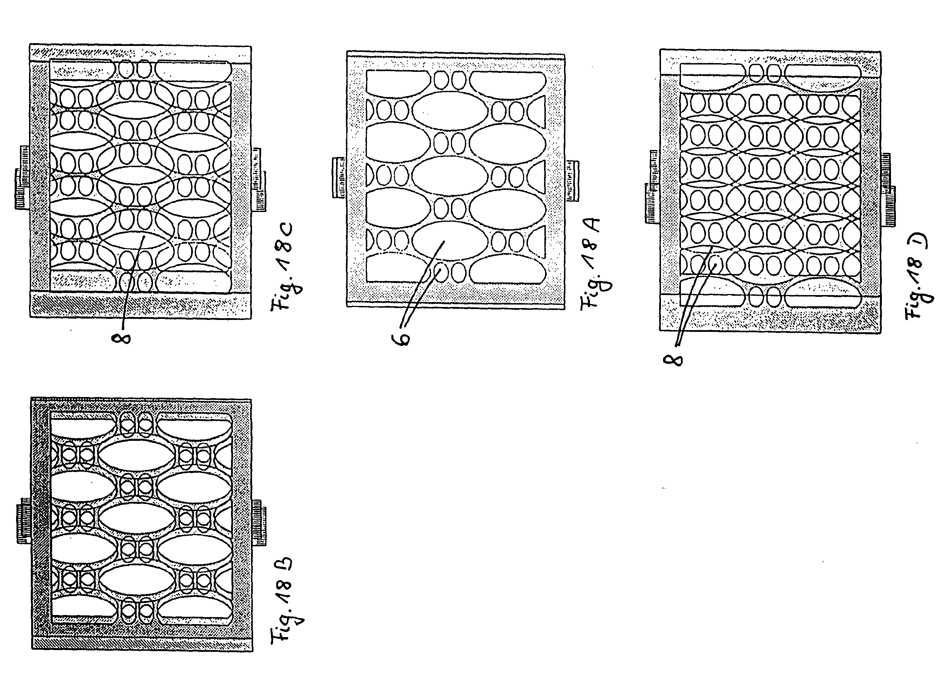

Bei den in den Figuren 18 gezeigten elliptischen Sieblöchern 6 kann Erntegut mit unterschiedlichen Partikelgrößen ausgesiebt werden. Eine entsprechende Aussiebung ist beispielsweise bei Corn-Cob-Mix-Erntegut erwünscht. Und zwar sollen neben dem Körnermais auch in einem vorwählbaren Umfang Spindelteile der Maiskolben mit in den Korntank wandern, da diese Spindelanteile als Futter gut verwertbar sind. Während der Körnermais durch die kleineren Sieblöcher 6 fallen kann, können die größeren Spindeln durch die größeren Sieblöcher 6 fallen. Sollen die Spindelanteile verringert werden, kann das Lochbild so verstellt werden, daß es den in Figur 18B dargestellten Zustand zeigt. Sind nur noch ganz geringe Spindelanteile gewünscht, kann die in Fig. 18C dargestellte Lochgröße eingestellt werden. Wird schließlich das in Fig. 18D dargestellte Lochbild eingestellt, fallen nur noch die Maiskörner durch die Siebbaugruppe 24 hindurch, die Spindelanteile können durch die verkleinerten Lochgrößen nicht mehr hindurchfallen. Somit ist es nicht mehr erforderlich, unterschiedliche Siebe einzubauen, wenn die Maschine von Körnermais auf Corn-Cob-Mix umgestellt wird. Wegen der geringeren Umrüstungszeiten steigt dadurch die effektive Nutzungszeit der Maschine und damit die Schlagkraft deutlich an.

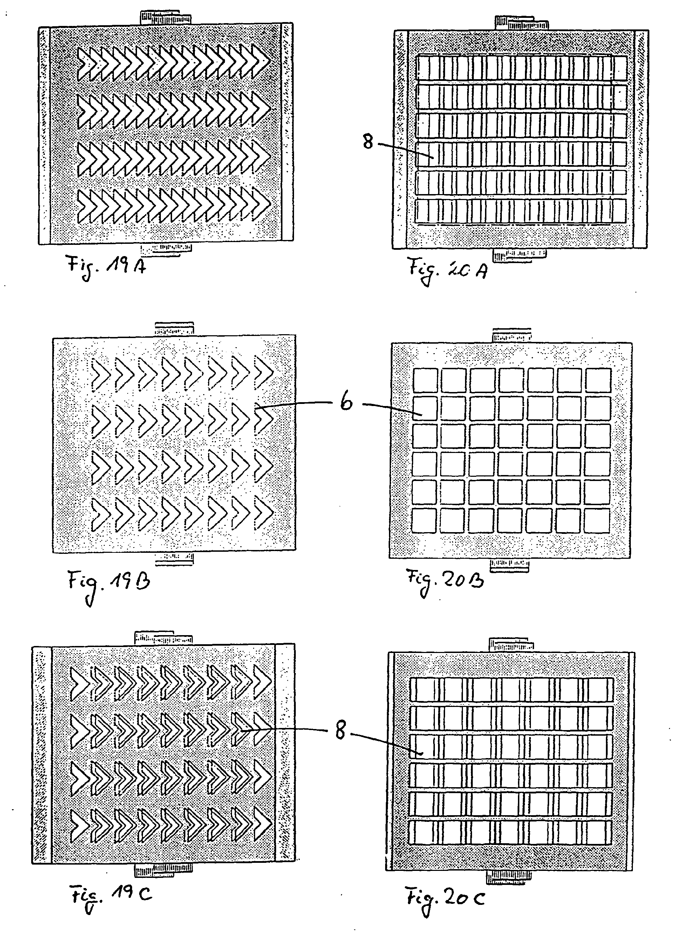

Die Figuren 19A bis C sowie 20A bis C zeigen unterschiedliche Lochbilder mit quadratischer bzw. dreieckiger Ausbildung der Sieblöcher 6.

In den Lochbildern der Figuren 14 bis 20 sind beispielhaft unterschiedliche Lochformen und -größen gezeigt. Die Varianz der Lochgrößen und -formen kann nochmals gesteigert werden, wenn die Siebelemente 4 nicht nur in einer Richtung verstellbar ausgebildet sind.

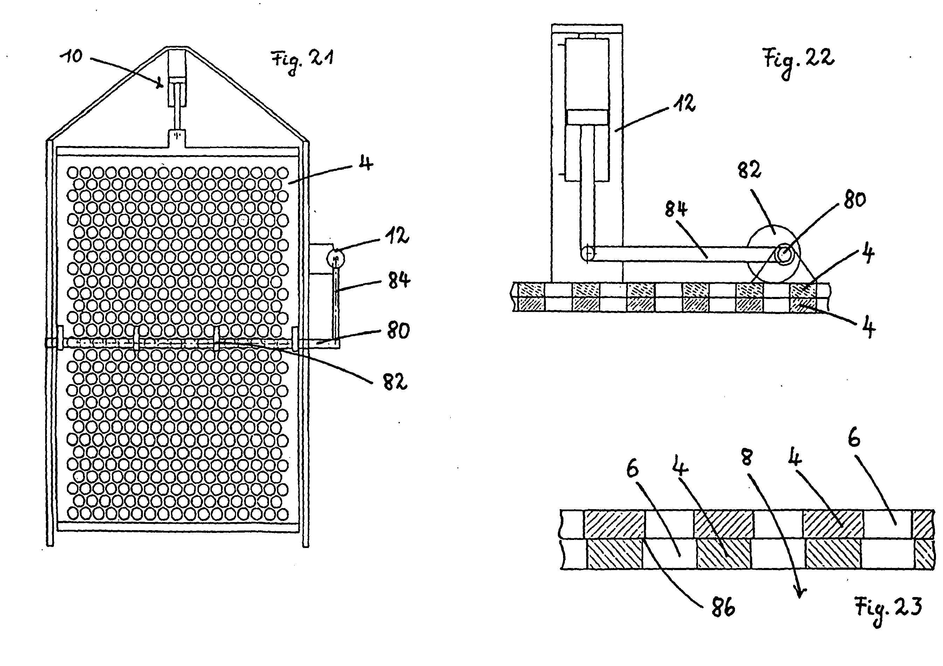

In Figur 21 ist eine Siebvorrichtung 2 aus einer Sicht von oben dargestellt. Als Spannelement 22 ist quer über ein Siebelement 4 verlaufend eine Welle 80 angeordnet, die Exzenter 82 aufweist. An der Welle 80 ist ein Exzenterhebel 84 befestigt, der von einem Hydraulikzylinder 12 betätigbar ist. Zur Verstellung des Siebs kann nun wie folgt vorgegangen werden: der Hydraulikzylinder 12 dreht durch Betätigung die Exzenter 82 so, daß diese allenfalls unter geringem Anpreßdruck auf dem oberen Siebelement 4 aufliegen. Sodann kann das verstellbare Siebelement 4 in eine neue Sollposition verschoben werden durch die Betätigung der Verstellvorrichtung 10. Danach klemmt der Hydraulikzylinder 12 durch Betätigung des Exzenterhebels 84 die Exzenter 82 wieder fest. Bei einer funktionsmäßigen Kopplung der Betätigung der Verstellvorrichtung 10 mit der motorischen Betätigung des Exzenterhebels 84 - beispielsweise durch entsprechende Elektronik - kann die Verstellung der Sieböffnung sehr materialschonend vorgenommen werden, da die Verstellung nur unter allenfalls geringem Anpreßdruck der Spannelemente 22 erfolgt. Über den Hydraulikzylinder 12 ist mit einem Proportionalventil die Stellkraft und damit die Anpreßkraft der Exzenter 82 variabel einstellbar. Die beschriebene Siebklemmvorrichtung ist in Figur 22 in einer Seitenansicht dargestellt.

In Figur 23 ist ein Querschnitt durch aufeinanderliegende Siebelemente 4 gezeigt. Die Sieblöcher 6 sind dabei so ausgebildet, daß die Sieblöcher 6 des oberen Siebelements 4 kleiner sind als die Sieblöcher 6 des unteren Siebelements 4. Dadurch bildet sich am Übergang vom oberen Siebloch 6 zum unteren Siebloch 6 ein Vorsprung aus, der eine Schnittkante 86 bildet. Bei einer solchen Ausgestaltung können klebrige Siebgüter besser durch die Sieböffnung 8 fallen, weil sie nicht so leicht an den Lochwänden anhaften und bei einem Reinigungshub leichter abfallen.

## Patentansprüche

1. Siebvorrichtung (2) mit zumindest zwei aufeinander liegenden Siebelementen (4), die jeweils eine Mehrzahl von Sieblöchern (6) aufweisen, die abhängig von der relativen Lage der Siebelemente (4) zueinander gemeinsame Sieböffnungen (8) ausbilden, und einer Verstellvorrichtung (10), **dadurch gekennzeichnet, daß** die Siebelemente (4) durch zumindest ein Spannelement (22) aufeinander gedrückt gehalten sind und die relative Lage der Siebelemente (4) zueinander durch die Betätigung motorischer Stellmittel (12) veränderbar ist.

2. Siebvorrichtung (2) nach Anspruch 1, **dadurch gekennzeichnet, daß** der Anpreßdruck des Spannelements (22) variabel einstellbar ist.

3. Siebvorrichtung (2) nach Anspruch 1 oder 2, **dadurch gekennzeichnet, daß** zumindest ein Spannelement (22) in seinem Anpreßdruck auf einen Druckwert eingestellt ist, bei dem die Kontaktfläche des Spannelements (22) zu einem Siebelement (4) eine Reibschlußkraft aufbringt, durch die die Siebelemente (4) in einer relativen Lage zueinander gehalten sind, und die motorischen Stellmittel (12) eine Kraft aufweisen, die so groß ist, daß sie die von einem oder mehreren Spannelementen (22) erzeugte Reibschlußkraft überwindet.

4. Siebvorrichtung (2) nach einem der vorhergehenden Ansprüche, **dadurch gekennzeichnet, daß** das motorische Stellmittel (12) einends an einem verlagerbaren Siebelement (4) angreift und anderenends direkt oder über eine Haltekonsole an einem anderen Siebelement (4) befestigt ist.

5. Siebvorrichtung (2) nach einem der vorhergehenden Ansprüche, **dadurch gekennzeichnet, daß** die Siebvorrichtung (2) ein Langloch (44), eine Steuerkante (62) oder eine sonstige Kulisse aufweist, durch die das verstellbare Siebelement (4) in seiner Verstellbewegung geführt ist.

6. Siebvorrichtung (2) nach einem der vorhergehenden Ansprüche, **dadurch gekennzeichnet, daß** zumindest ein Siebelement (4) in einer Siebebene der Siebvorrichtung (2) in mehrere Teilsieb-Elemente (4a, 4b) unterteilt ist, und eine motorische Verstellbewegung durch eine formschlüssige Verbindung von einem Teilsieb-Element (4a, 4b) auf ein anderes Teilsieb-Element (4a, 4b) übertragbar ist.

7. Siebvorrichtung (2) nach einem der vorhergehenden Ansprüche, **dadurch gekennzeichnet, daß** die Siebelemente (4) ein Sieblochbild zeigen, durch das in einer Lage der Siebelemente (4) übereinander liegende Sieblöcher (6) der Siebelemente (4) eine gemeinsame Sieböffnung (8) bilden und das gleiche Siebloch (6) eines Siebelements (4) bei einer anderen relativen Lage der Siebelemente (4) zueinander mit mehreren Sieblöchern (6) des anderen Siebelements (4) mehrere gemeinsame Sieböffnungen (8) bilden.

8. Siebvorrichtung (2) nach einem der vorhergehenden Ansprüche, **dadurch gekennzeichnet, daß** die Siebvorrichtung (2) als Trommelsieb (56) ausgebildet ist, der Stellmotor auf einen Stellring (68) wirkt, der am inneren oder äußeren Umfangskreis des Trommelsiebs (56) ausgebildet ist und der Stellring (68) mit zumindest einem Siebelement (4) verbunden ist.

9. Siebvorrichtung (2) nach Anspruch 6, **dadurch gekennzeichnet, daß** der Stellring (68) von einer Stellgabel (74) umfaßt ist, an der endseitig Führungsrollen (76) angebracht sind, deren Drehachse orthogonal zur Verstellrichtung des Stellmotors liegt und deren Laufflächen auf jeweils eine Oberfläche (78) des Stellrings (68) wirken.

10. Siebvorrichtung (2) nach Anspruch 7, **dadurch gekennzeichnet, daß** die Stellgabel (74) auf ihrem Verstellweg durch eine Gleitlagerung geführt ist.

11. Siebvorrichtung (2) nach einem der Ansprüche 6 bis 8, **dadurch gekennzeichnet, daß** das äußere Siebelement (4) in axialer Richtung in Teilsieb-Elemente (4a, 4b) geteilt ist und als Spannelemente (22) Spannschrauben am Außenumfang des Trommelsiebs angebracht sind, die eine Trennkante (58) zwischen zwei Teilsieb-Elementen (4a, 4b) überbrücken.

12. Siebvorrichtung nach einem der vorhergehenden Ansprüche, **dadurch gekennzeichnet, daß** eine Verstellbewegung eines Siebelements (4) impulsförmig erfolgt.

13. Siebvorrichtung nach einem der vorhergehenden Ansprüche, **dadurch gekennzeichnet, daß** die motorischen Stellmittel zur Veränderung der relativen Lage der Siebelemente (4) zueinander funktionsmäßig gekoppelt sind mit einem Stellmittel (12), durch dessen Betätigung der Anpreßdruck zumindest eines Spannelements (22) veränderbar ist.

## Claims

1. Screening arrangement (2), having at least two screen elements (4) lying on top of one another each of which has a plurality of screening holes (6) which, as a function of the relative positions of the screen elements (4), form screening openings (8) which the screen elements (4) share with one another, and having an adjusting arrangement (10), **characterised in that** the screen elements (4) are held pressed against one another by at least one clamping element (22), and the positions of the screen elements (4) relative to one another can be varied by the actuation of motorised positioning means (12).

2. Screening arrangement (2) according to claim 1, **characterised in that** the pressure applied by the clamping element (22) can be set at a variable level.

3. Screening arrangement (2) according to claim 1 or 2, **characterised in that** at least one clamping element (22) can be set, in respect of the pressure applied by it, to a level of pressure at which that area of the clamping element (22) which is in contact with a screen element (4) applies a frictional locking force by which the screen elements (4) are held in position relative to one another, and the force from the motorised positioning means (12) is sufficiently high for it to overcome the frictional locking force produced by one or more clamping elements (22).

4. Screening arrangement (2) according to one of the foregoing claims, **characterised in that** the motorised positioning means (12) engages at one end with a displaceable screen element (4) and at the other end is fastened to another screen element (4) either directly or via a holding bracket.

5. Screening arrangement (2) according to one of the foregoing claims, **characterised in that** the screening arrangement (2) has a slotted hole (44), a controlling edge (62) or some other slideway by which the adjustable screen element (4) is guided in its adjusting movement.

6. Screening arrangement (2) according to one of the foregoing claims, **characterised in that** at least one screen element (4) is divided into a plurality of sub-screen-elements (4a, 4b) in a screening plane of the screening arrangement (2), and a motorised adjusting movement can be transmitted from one sub-screen-element (4a, 4b) to another sub-screen-element (4a, 4b) by a connection operating by positive interengagement.

7. Screening arrangement (2) according to one of the foregoing claims, **characterised in that** the screen elements (4) form a pattern of screening holes which causes screen holes (6) in the screen elements (4) which lie one above the other when the screen elements (4) are in one position to form single shared screening openings (8) and, when the screen elements (4) are in a different position relative to one another, the same screening hole (6) in a screen element (4) forms a plurality of shared screening openings (8) with a plurality of screening holes (6) in the other screen element (4).

8. Screening arrangement (2) according to one of the foregoing claims, **characterised in that** the screening arrangement (2) is in the form of a revolving screen (56), the positioning motor acts on a positioning ring (68) which is formed on the inner or outer circular circumference of the revolving screen (56), and the positioning ring (68) is connected to at least one screen element (4).

9. Screening arrangement (2) according to claim 6, **characterised in that** the positioning ring (68) is gripping by a positioning yoke (74) on the ends of which are mounted guiding rollers (76) whose axes of rotation are orthogonal to the direction in which the positioning motor makes its adjustments and whose contacting faces act on respective surfaces (78) of the positioning ring (68).

10. Screening arrangement (2) according to claim 7, **characterised in that** the positioning yoke (74) is guided on its adjusting travel by a sliding mounting.

11. Screening arrangement (2) according to one of claims 6 to 8, **characterised in that** the outer screen element (4) is divided into sub-screen-elements (4a, 4b) in the axial direction, and clamping bolts, acting as clamping elements (22), which form a bridge between separating edges (58) between two sub-screen-elements (4a, 4b), are mounted on the outer circumference of the drum screen.

12. Screening arrangement (2) according to one of the foregoing claims, **characterised in that** an adjusting movement of a screen element (4) takes place in a pulsed fashion.

13. Screening arrangement (2) according to one of the foregoing claims, **characterised in that** the motorised positioning means for varying the positions of the screen elements relative to one another are functionally coupled to a positioning means (12) by the actuation of which the pressure applied by at least one clamping element (22) can be varied.

## Revendications

1. Dispositif de tamis (2) comportant au moins deux éléments de tamis (4) disposés l'un sur l'autre, lesquels présentent une pluralité d'orifices de tamis (6) formant des ouvertures de tamis (8) dépendant des positions relatives des éléments de tamis (4), et un dispositif ajustable (10), **caractérisé en ce que** les éléments de tamis (4) sont maintenus pressés l'un sur l'autre par au moins un élément de serrage (22) et **en ce que** la position relative des éléments de tamis (4) peut être modifiée en actionnant un élément de réglage motorisé (12).

2. Dispositif de tamis (2) selon la revendication 1, **caractérisé en ce que** la force de serrage de l'élément de serrage (22) est ajustable de manière variable.

3. Dispositif de tamis (2) selon la revendication 1 ou 2, **caractérisé en ce que** au moins un élément de serrage (22) est ajusté, en ce qui concerne sa force de serrage à une valeur de pression à laquelle la surface de contact de l'élément de serrage (22) applique une force d'enfoncement par pression à un élément de tamis (4), par laquelle les éléments de tamis (4) sont maintenus les uns aux autres dans une position relative, et l'élément de réglage motorisé (12) présente une force tellement grande qu'elle est supérieure à la force d'enfoncement par pression produite par un ou plusieurs éléments de serrage (22).

4. Dispositif de tamis (2) selon l'une quelconque des revendications précédentes, **caractérisé en ce que** l'élément de réglage motorisé (12) est appliqué au niveau d'une extrémité d'un élément de tamis (4) pouvant être déplacé et fixé au niveau d'une autre extrémité directement ou au-dessus d'un porte-àfaux de maintien à un autre élément de tamis (4).

5. Dispositif de tamis (2) selon l'une quelconque des revendications précédentes, **caractérisé en ce que** le dispositif de tamis (2) présente un orifice longitudinal (44), une rampe hélicoïdale (62) ou une autre coulisse, par lequel/laquelle l'élément de tamis (4) réglable est amené dans son mouvement de réglage.

6. Dispositif de tamis (2) selon l'une quelconque des revendications précédentes, **caractérisé en ce que** au moins un élément de tamis (4) est divisé dans un plan de tamis du dispositif de tamis (2) en plusieurs éléments de tamis partiels (4a, 4b), et un mouvement de réglage motorisé est transmissible par une jonction mécanique d'un élément de tamis partiel (4a, 4b) à un autre élément de tamis partiel (4a, 4b).

7. Dispositif de tamis (2) selon l'une quelconque des revendications précédentes, **caractérisé en ce que** les éléments de tamis (4) présentent un gabarit d'orifices de tamis à travers lequel, dans une position des éléments de tamis (4), les orifices de tamis (6) superposés des éléments de tamis (4) forment une ouverture de tamis commune (8) et le même orifice de tamis (6) d'un élément de tamis (4), dans une autre position relative des éléments de tamis (4), forme avec plusieurs orifices de tamis (6) de l'autre élément de tamis (4) plusieurs ouvertures de tamis (8) communes.

8. Dispositif de tamis (2) selon l'une quelconque des revendications précédentes, **caractérisé en ce que** le dispositif de tamis (2) est formé comme un tamis rotatif (56), le servomoteur agit sur une bague de réglage (68) formée à l'intérieur ou à l'extérieur de la périphérie du tamis rotatif (56) et la bague de réglage (68) est connectée à au moins un élément de tamis (4).

9. Dispositif de tamis (2) selon la revendication 6, **caractérisé en ce que** la bague de réglage (68) est entourée d'une fourche de réglage (74) placée d'un côté des rouleaux de guidage (76), dont les axes de rotation sont orthogonaux à la direction de réglage du servomoteur et dont les surfaces de roulement agissent sur une surface (78) de la bague de réglage (68).

10. Dispositif de tamis (2) selon la revendication 7, **caractérisé en ce que** la fourche de réglage (74) est guidée sur sa course de réglage par un palier à glissement.

11. Dispositif de tamis (2) selon l'une quelconque des revendications 6 à 8, **caractérisé en ce que** l'élément de tamis (4) extérieur est partagé dans une direction axiale dans l'élément de tamis partiel (4a, 4b) et **en ce que** des vis de serrage sont fixées au niveau de la périphérie extérieure du tamis rotatif en tant qu'éléments de serrage (22), lesquelles pontent une arête de séparation (58) entre deux éléments de tamis partiels (4a, 4b).

12. Dispositif de tamis selon l'une quelconque des revendications précédentes, **caractérisé en ce qu'**un mouvement de réglage d'un élément de tamis (4) s'effectue par impulsions.

13. Dispositif de tamis selon l'une quelconque des revendications précédentes, **caractérisé en ce que** les éléments de réglage motorisés sont couplés de manière fonctionnelle les uns aux autres à un élément de réglage (12) pour modifier la position relative des éléments de tamis (4), dont l'actionnement permet de modifier la force de serrage d'au moins un élément de serrage (22).
